# EUROPÄISCHE PATENTSCHRIFT

(11) **EP 0 769 433 B1**
(45) Veröffentlichungstag und Bekanntmachung des Hinweises auf die Patenterteilung: **01.09.1999**
(21) Anmeldenummer: 96115809.4
(22) Anmeldetag: 02.10.1996
(51) Int. Cl.: B60R 22/46

(54) **Gurtaufroller mit Gurtstraffer und Kraftbegrenzung**
Safety belt reel with tensioner and tension limitation
Enrouleur de ceinture de sécurité avec tensionneur et limitation de tension

(30) Priorität: 20.10.1995 DE 29516628 U
(43) Veröffentlichungstag der Anmeldung: 23.04.1997
(73) Patentinhaber: TRW Occupant Restraint Systems GmbH & Co. KG, 73551 Alfdorf (DE)
(72) Erfinder: Föhl, Artur, 73614 Schorndorf (DE)
(74) Vertreter: Degwert, Hartmut, Dipl.-Phys.

(56) Entgegenhaltungen:
- DE-A- 4 314 883

## Beschreibung

Die Erfindung betrifft einen Gurtaufroller, dessen in einem Gehäuse drehbar gelagerte Gurtspule einerseits mit einem Drehantrieb zur Gurtstraffung koppelbar ist und andererseits drehfest an ein kraftbegrenzendes Element angeschlossen ist, das seinerseits mittels wenigstens einer schwenkbar gelagerten, durch eine Rückstellfeder in eine Ruhestellung belasteten Klinke an einer Sperrverzahnung des Gehäuses arretierbar ist.

Als kraftbegrenzendes Element kann ein Torsionsstab verwendet werden, der koaxial in die hohle Gurtspule eingesetzt ist. Der Gurtstrafferantrieb greift an dem einen Ende des Torsionsstabes an, dessen anderes Ende mittels einer oder mehrerer Klinken an der Sperrverzahnung des Gehäuses arretierbar ist. Die Klinken können an einer Trägerscheibe schwenkbar gelagert sein, die an dem zugehörigen Ende des Torsionsstabes drehfest angeschlossen ist.

Im Normalbetrieb des Gurtaufrollers werden die Klinken durch die zugeordneten Rückstellfedern in der Ruhelage gehalten, so daß die Gurtspule unbehindert drehbar ist. Die Rückstellfedern sind so dimensioniert, daß sie die Klinken auch bei relativ schneller Gurtspulendrehung von beispielsweise 1.000 U/min oder mehr entgegen der Fliehkraft in ihrer Ruhestellung halten. Bei Aktivierung des Drehantriebs zur Gurtstraffung wird die Gurtspule zunächst stark beschleunigt und kann Drehzahlen von weit über 10.000 U/min erreichen. Aufgrund der hohen Fliehkraft, spätestens aber beim plötzlichen Abbremsen der Gurtspule am Ende der Strafferdrehung, werden die Klinken in Richtung der Sperrverzahnung am Gehäuse ausgelenkt. Bei der anschließenden Vorverlagerung des Fahrzeuginsassen dreht sich die Gurtspule in entgegengesetzter Richtung, bis die nunmehr ausgelenkten Klinken in der Sperrverzahnung des Gehäuses einrasten. Eine weitere Gurtspulendrehung ist nun nur unter Verwindung des Torsionsstabes möglich, wobei der angestrebte Effekt der Kraftbegrenzung auftritt.

Es sind aber Situationen denkbar, bei denen die Umkehrung der Drehbewegung der Gurtspule nach erfolgter Gurtstraffung nicht unmittelbar, sondern mit geringer Verzögerung erfolgt, beispielsweise von wenigen Millisekunden. Da die Rückstellfedern an den Klinken relativ stark dimensioniert sind, damit sie eine Auslenkung der Klinken durch Fliehkraft im normalen Aufrollerbetrieb mit Sicherheit verhindern, verfügen sie über entsprechend hohe Rückstellkräfte und vermögen daher die Klinken entsprechend schnell in die Ruhestellung zurückzubewegen. In einem solchen Falle würde zwar der zusätzlich vorhandene, fahrzeug- und/oder gurtbandsensitive Blockiermechanismus des Gurtaufrollers aktiviert, jedoch könnte keine Kraftbegrenzung durch Verwinden des Torsionsstabes erfolgen.

Durch die Erfindung wird ein Gurtaufroller der eingangs angegebenen Art dahingehend weitergebildet, daß eine vorzeitige Rückbewegung der Klinken in die Ruhestellung mit Sicherheit vermieden wird. Gemäß der Erfindung ist der Klinke bzw. jeder Klinke eine Hemmeinrichtung zugeordnet, die ihre Rückbewegung in die Ruhestellung verzögert. Diese Hemmeinrichtung vermag somit die möglicherweise zwischen dem Ende des Straffvorganges und dem Beginn der Gurtspulenrückdrehung verstreichende, kurze Zeitspanne zu überbrücken, so daß die Klinken noch im ausgelenkten Zustand sind, wenn diese entgegengesetzte Drehung der Gurtspule bei der Vorverlagerung des Fahrzeuginsassen beginnt. Folglich kommen die Klinken sicher mit der Sperrverzahnung am Gehäuse in Eingriff.

Die Hemmeinrichtung kann auf vielfältige Weise verwirklicht werden. Eine besonders einfache Lösung besteht darin, daß die Hemmeinrichtung durch ein mit der Klinke in Gleiteingriff stehendes Reibungselement gebildet ist, insbesondere ein Reibungselement an der Rückstellfeder selbst.

Die Hemmeinrichtung kann aber auch durch eine Rasteinrichtung gebildet sein, welche die Klinke in einer ausgelenkten Stellung lösbar verrastet. Mit einer solchen Ausgestaltung werden beliebig lange Zeitspannen zwischen dem Ende des Straffvorganges und der entgegengesetzten Gurtspulendrehung überbrückt. Die Rückbewegung der Klinken in die Ruhestellung erfolgt dann durch die normale Aufrollerfeder, die nach einer Fahrzeugkollision die Gurtspule zurückdreht, wobei die Klinken von der Sperrverzahnung am Gehäuse abgewiesen werden, so daß die Verrastung gelöst wird.

Alternativ oder zusätzlich kann die Klinke in ihrer Ruhestellung durch eine Rasteinrichtung lösbar mit der Rückstellfeder gekoppelt und in ausgelenkter Stellung von dieser Rückstellfeder entkoppelt sein. Bei einer solchen Ausführungsform ist die Rückstellfeder unwirksam, solange die Klinke ausgelenkt ist; auch hier wird die Klinke bei der Aufrolldrehung der Gurtspule durch die Aufrollfeder an der Sperrverzahnung abgewiesen, so daß nun die Rückstellfeder wieder an der Klinke einrastet und diese vollends in die Ruhestellung zurückbewegt.

Weitere Merkmale und Vorteile der Erfindung ergeben sich aus der folgenden Beschreibung und aus der Zeichnung, auf die Bezug genommen wird. In der Zeichnung zeigen:
- Figur 1 einen schematischen Längsschnitt eines Gurtaufrollers;
- Figur 2 einen Querschnitt des Gurtaufrollers gemäß Linie II-II in Figur 1;
- Figur 3 einen vergrößerten Ausschnitt aus Figur 2;
- Figur 4 einen Querschnitt entlang Linie IV-IV in Figur 3;
- Figur 5 eine Draufsicht auf die in den Figuren 3 und 4 gezeigte Klinke mit Rückstellfeder; und
- Figuren 6a bis 6e vergrößerte Teilansichten einer Klinke mit Rückstellfeder gemäß mehreren Ausführungsformen.

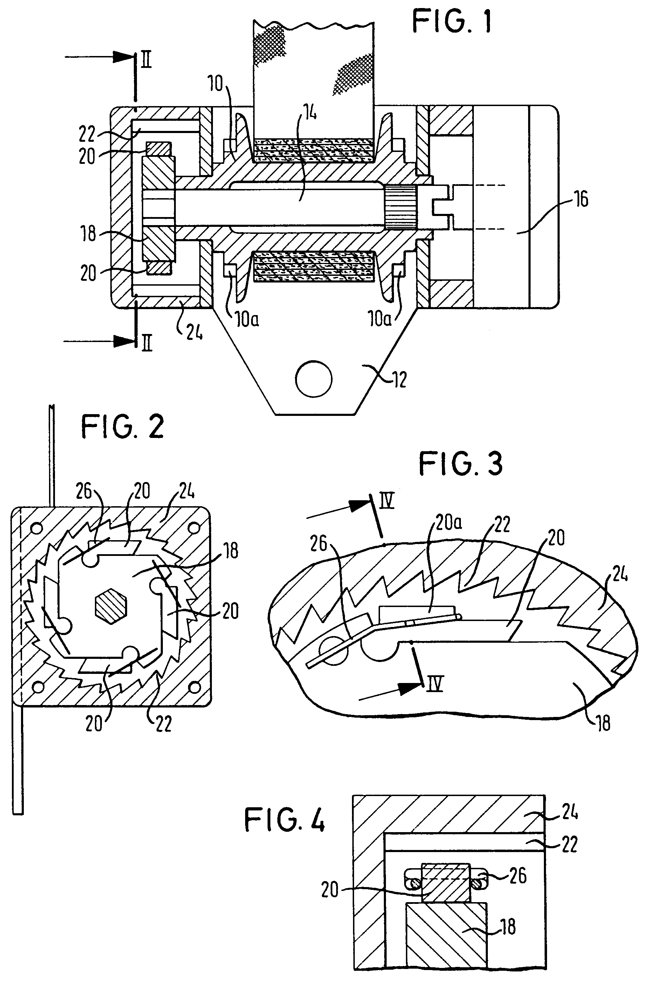

Bei der in Figur 1 gezeigten Ausführungsform des Gurtaufrollers ist eine Gurtspule 10 drehbar in einem Gehäuse 12 gelagert. Die Gurtspule 10 ist hohl ausgebildet. Koaxial durch die Gurtspule 10 erstreckt sich ein Torsionsstab 14, dessen eines Ende durch eine Kerbverzahnung drehfest mit der Gurtspule verbunden ist und an einen nur schematisch dargestellten Drehantrieb 16 zur Gurtstraffung ankoppelbar ist. An dem gegenüberliegenden Ende des Torsionsstabes 14 ist eine Trägerscheibe 18 drehfest angeschlossen. An der Trägerscheibe 18 sind vier Klinken 20 schwenkbar gelagert. Die Klinken sind von einer Sperrverzahnung 22 umgeben, die an der Innenseite eines lasttragend mit dem Gehäuse 12 verbundenen Ringteils 24 ausgebildet ist.

Jede der Klinken 20 ist durch eine Rückstellfeder 26 in ihre Ruhestellung in Anlage am Außenumfang der Trägerscheibe 18 belastet. Die Rückstellfeder 26 kann als Blattfeder oder Federdraht ausgebildet sein.

Im normalen Aufrollbetrieb des Gurtaufrollers ist der Drehantrieb 16 von dem Torsionsstab 14 und der Gurtspule 10 abgekoppelt; ferner werden die Klinken 20 durch die zugeordneten Rückstellfedern 26 in der Ruhestellung gehalten. Die Gurtspule 10 ist daher unbehindert drehbar. Bei Aktivierung des Drehantriebs 16 zur Gurtstraffung wird dieser über eine nicht gezeigte Kupplung an den Torsionsstab 14 angekoppelt und versetzt über diesen die Gurtspule 10 in Drehung. Die Gurtspule 10 erreicht innerhalb von wenigen Millisekunden eine Drehzahl von weit mehr als 10.000 U/min, so daß nun die Klinken 20 durch Fliekraft in Richtung der Sperrverzahnung 22 ausgelenkt werden. Am Ende der Strafferdrehung wird die Gurtspule 10 abrupt angehalten, so daß die Klinken 20 zusätzlich durch Massenträgheit in Richtung der Sperrverzahnung 22 ausgelenkt werden. Unmittelbar anschließend erfolgt normalerweise aufgrund der nun einsetzenden Vorverlagerung des Fahrzeuginsassen eine Rückdrehung der Gurtspule 10. Bei dieser Rückdrehung rastet wenigstens eine der Klinken 20 in der Sperrverzahnung 22 ein.

Da jedoch nicht ausgeschlossen werden kann, daß zwischen dem Ende der Strafferdrehung und der Rückdrehung der Gurtspule eine kurze Zeitspanne verstreicht, während welcher die relativ stark dimensionierten Rückstellfedern 26 die Klinken 20 in Richtung der Ruhestellung zurückbewegen könnten, sind erfindungsgemäß Maßnahmen getroffen, um die Rückbewegung der Klinken in die Ruhestellung zu verzögern.

Bei der in den Figuren 3 bis 5 gezeigten Ausführungsform ist die Rückstellfeder 26 als U-förmiger Bügel ausgebildet, dessen Schenkel an ihren freien Enden beiderseits der Trägerscheibe 18 eingespannt sind. Der gegenüberliegende Bügelteil umgreift einen Absatz 20a am Rücken der Klinke 20. An jedem Schenkel der Rückstellfeder 26 ist eine einwärts gerichtete Einprägung 26a, 26b vorhanden, die mit der Seite der Klinke 20 in Gleiteingriff steht. Diese Einprägungen 26a, 26b bilden jeweils ein Reibungselement, das bei Auslenkung der Klinke 20 über deren Seitenfläche gleitet. Durch den dabei auftretenden Reibungseffekt wird die Rückbewegung der Klinke in ihrer Ruhestellung ausreichend verzögert, so daß nach beendeter Gurtstraffung die Klinken 20 sicher in der Sperrverzahnung einrasten.

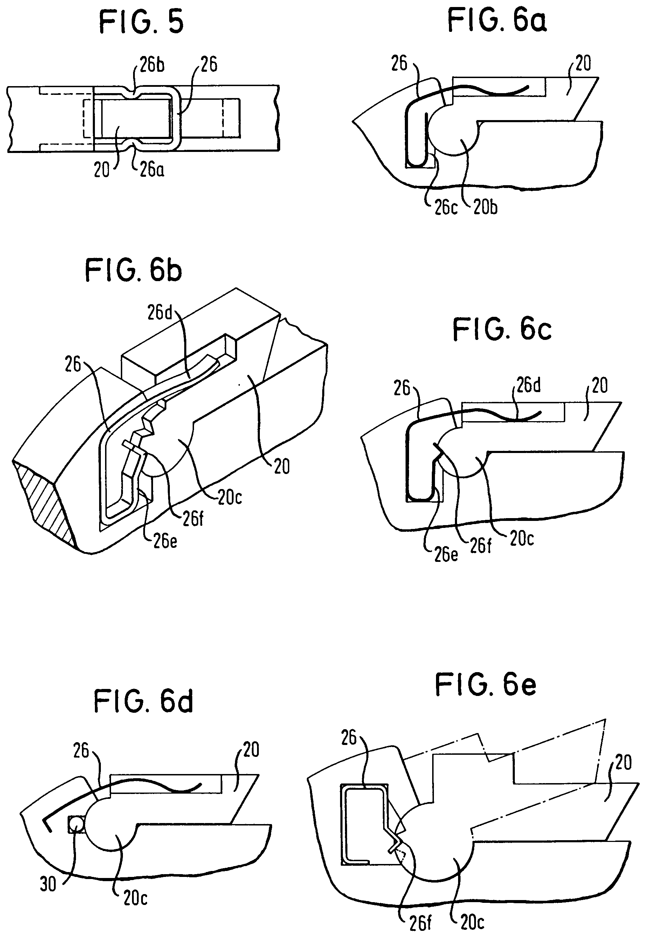

Bei der in Figur 6a gezeigten Ausführungsform ist die Rückstellfeder 26 mit einem Federschenkel 26c versehen, der mit dem Umfang des kreisrunden Lagerstücks 20b der Klinke 20 in Gleiteingriff steht. Auch hier wird die Rückbewegung der Klinke 20 durch den dabei auftretenden Reibungseffekt verzögert.

Bei der in Figur 6b gezeigten Ausführungsform liegt ein Schenkel 26d der Rückstellfeder 26 auf dem Rücken der Klinke 20 auf. Ein weiterer Schenkel 26e der Rückstellfeder 26 ist mit einer Rastnase 26f versehen, die in einer Kerbe am Lagerteil 20c der Klinke 20 einrasten kann. Die Rastnase 26f greift in diese Kerbe ein, wenn die Klinke 20 ausgelenkt ist. Folglich wird die Klinke 20, nachdem sie ausgelenkt ist, stabil in der ausgelenkten Stellung gehalten. Erst bei Drehung der Gurtspule 10 und folglich der Trägerscheibe 18 in Aufrollrichtung unter der Wirkung der Aufrollfeder wird die Klinke aus ihrer ausgelenkten Stellung in Richtung ihrer Ruhestellung zurückbewegt, indem sie von den Zahnrücken der Sperrverzahnung 22 abgewiesen wird. Dabei löst sich die Rastnase 26f aus der Kerbe am Lagerteil 20c der Klinke 20, so daß die Rückstellfeder 26 die Klinke 20 nunmehr mit ihrem Federschenkel 26d vollends in die Ruhestellung zurückbewegt. Die Gurtspule ist nun wieder frei drehbar.

Bei der Ausführungsform nach Figur 6c weist die Rückstellfeder 26 gleichfalls einen auf dem Rücken der Klinke 20 aufliegenden Federschenkel 26d sowie einen Schenkel 26e mit einer Rastnase 26f auf. Jedoch ist diese Rastnase 26f in der Ruhestellung der Klinke 20 mit der Kerbe an ihrem Lagerteil 20c in Eingriff. Solange die Rastnase 26f in diese Kerbe eingreift, ist eine relativ hohe Kraft erforderlich, um die Klinke 20 auszulenken. Im ausgelenkten Zustand hingegen, wenn die Rastnase 26f aus der Kerbe am Lagerteil 20c ausgetreten ist, wirkt nur noch der relativ schwache Federschenkel 26d, wodurch gleichfalls die Rückbewegung der Klinke 20 in ihre Ruhestellung ausreichend verzögert wird.

Bei der in Figur 6d gezeigten Ausführungsform ist eine von der Rückstellfeder 26 unabhängig wirkende Hemmeinrichtung durch einen Wälzkörper 30 gebildet, der elastisch in Reibungseingriff mit dem kreisrunden Umfang des Lagerteils 20c der Klinke 20 gehalten ist.

Figur 6e zeigt schließlich eine bevorzugte Ausführungsform, bei welcher die Klinke 20 zwei stabile Lagen einnehmen kann: die mit durchgezogener Linie eingezeichnete Ruhestellung und die strichpunktiert dargestellte ausgelenkte Stellung. Die Rückstellfeder 26 weist wiederum eine Rastnase 26f auf, die aber selektiv mit einer von zwei Rastkerben am Umfang des Lagerteils 20c der Klinke 20 in Eingriff kommt. Auch bei dieser Ausführungsform wird die Klinke 20 bei der Aufrolldrehung der Gurtspule unter der Wirkung der Aufrollfeder zunächst an den Zahnrücken der Sperrverzahnung 22 abgewiesen, wobei die Rastnase 26f sich aus der entsprechenden Kerbe am Lagerteil 20c der Klinke 20 löst, woraufhin die Rastnase 26f in die zweite Kerbe eingreift und dadurch die Klinke 20 vollends in ihre Ruhestellung zurückbewegt.

Es ist noch zu erwähnen, daß der Gurtaufroller zusätzlich mit einem üblichen fahrzeug- und gurtbandsensitiven Blockiermechanismus ausgestattet ist, der zur Vereinfachung in Figur 1 nicht dargestellt ist. Dieser Blockiermechanismus umfaßt insbesondere zwei starr miteinander verbundene Klinken, die mit an den Flanschen der Gurtspule 10 angeformten Sperrverzahnungen 10a zusammenwirken. Weiterhin ist bei praktischen Ausführungen des Gurtaufrollers das Ringteil 24 begrenzt verdrehbar an einem Seitenschenkel des Gehäuses 12 gelagert. Die begrenzte Drehung des Ringteils 24 wird in eine Steuerbewegung umgesetzt, durch welche der fahrzeug- und gurtbandsensitive Blockiermechanismus inaktiviert wird, wenn der aus Klinken 20 und Innenverzahnung 22 bestehende Sperrmechanismus wirksam ist.

Schließlich ist noch anzumerken, daß bei den Ausführungsformen nach den Figuren 6b, 6c und 6e die Rastnase alternativ an der Klinke 20 und eine entsprechende Kerbe an einem Schenkel der Rückstellfeder 26 ausgebildet sein kann.

## Patentansprüche

1. Gurtaufroller, dessen in einem Gehäuse drehbar gelagerte Gurtspule (10) einerseits mit einem Drehantrieb (16) zur Gurtstraffung koppelbar ist und andererseits drehfest an ein kraftbegrenzendes Element (14) angeschlossen ist, das seinerseits mittels wenigstens einer schwenkbar gelagerten, durch eine Rückstellfeder (26) in eine Ruhestellung belasteten Klinke (20) an einer Sperrverzahnung (22) des Gehäuses (10) arretierbar ist, dadurch gekennzeichnet, daß der Klinke bzw. jeder Klinke (20) eine Hemmeinrichtung (26a, 26b; 26c; 26f; 30) zugeordnet ist, die ihre Rückbewegung in die Ruhestellung verzögert.

2. Gurtaufroller nach Anspruch 1, dadurch gekennzeichnet, daß die Hemmeinrichtung durch ein mit der Klinke in Gleiteingriff stehendes Reibungselement (26a, 26b; 26c; 30) gebildet ist.

3. Gurtaufroller nach Anspruch 2, dadurch gekennzeichnet, daß das Reibungselement (26a, 26b; 26c) an der Rückstellfeder (26) selbst gebildet ist.

4. Gurtaufroller nach Anspruch 1, dadurch gekennzeichnet, daß die Hemmeinrichtung durch eine Rasteinrichtung (26f) gebildet ist, welche die Klinke (20) in einer ausgelenkten Stellung lösbar verrastet.

5. Gurtaufroller nach Anspruch 4, dadurch gekennzeichnet, daß die Rasteinrichtung durch eine Rastnase (26f) und eine Kerbe gebildet ist, von denen die eine an der Klinke (20) und die andere an der Rückstellfeder (26) gebildet ist.

6. Gurtaufroller nach einem der vorstehenden Ansprüche, dadurch gekennzeichnet, daß die Klinke (20) in ihrer Ruhestellung durch eine Rasteinrichtung (26f) lösbar mit der Rückstellfeder (26) gekoppelt und in ausgelenkter Stellung von der Rückstellfeder (26) entkoppelt ist.

## Claims

1. A belt retractor having a belt drum (10) which is rotatably supported in a housing and which is adapted to be coupled on the one hand with a rotary drive (16) for pretensioning the belt and on the other hand is connected with a force limiting element (14) in such a manner as to prevent relative rotation therebetween, said force limiting element for its part being adapted to be arrested by at least one pivotally mounted pawl (20) against a locking toothing (22) on the housing (10), said pawl being urged into a neutral position by a return spring (26), characterized in that the pawl or each pawl (20) has a retarding means (26a, 26b; 26c; 26f; 30) associated with it, which is adapted to delay the return movement of the pawl into the neutral position.

2. The belt retractor as claimed in claim 1, characterized in that the retarding means is constituted by a friction element (26a, 26b; 26c; 30) in sliding engagement with the pawl.

3. The belt retractor as claimed in claim 2, characterized in that the friction element (26a, 26b; 26c) is formed on the return spring (26) itself.

4. The belt retractor as claimed in claim 1, characterized in that the retarding means is formed by a detent means (26f) which releasably holds the pawl (20) in a shifted position thereof.

5. The belt retractor as claimed in claim 4, characterized in that the detent means is constituted by a detent spur (26f) and a notch, of which the one is formed on the pawl (20) and the other is formed on the return spring (26).

6. The belt retractor as claimed in any one of the preceding claims, characterized in that in its neutral position the pawl (20) is coupled releasably with the return spring (26) by a detent means (26f) and in the shifted position is decoupled from the return spring (26).

## Revendications

1. Enrouleur de ceinture, dont la bobine (10), montée de façon à pouvoir tourner dans un boîtier, d'une part peut être couplée avec un mécanisme d'entraînement en rotation (16) pour raidir la ceinture et d'autre part est raccordée de façon solidaire en rotation à un élément (14) qui limite les forces et qui peut être bloqué de son côté, au moyen d'au moins un cliquet (20) monté de façon à pouvoir pivoter et comprimé par un ressort de rappel (26) dans une position de repos, sur une denture de blocage (22) du carter (10), caractérisé en ce qu'au cliquet ou à chaque cliquet (20) est associé un dispositif de ralentissement (26a, 26b; 26c; 26f; 30), qui retarde son mouvement de retour à la position de repos.

2. Enrouleur de ceinture selon la revendication 1, caractérisé en ce que le dispositif de ralentissement est constitué par un élément à friction (26a, 26b; 26c; 30) qui est en prise glissante avec le cliquet.

3. Enrouleur de ceinture selon la revendication 2, caractérisé en ce que l'élément à friction (26a, 26b; 26c) est constitué lui-même sur le ressort de rappel (26).

4. Enrouleur de ceinture selon la revendication 1, caractérisé en ce que le dispositif ralentisseur est formé par un dispositif à encliquetage (26f), qui encliquette le cliquet (20), de façon amovible, dans une position déployée.

5. Enrouleur de ceinture selon la revendication 4, caractérisé en ce que le dispositif à encliquetage est constitué par un nez d'encliquetage (26f) et une encoche, dont l'une est formée sur le cliquet (20) et l'autre sur le ressort de rappel (26).

6. Enrouleur de ceinture selon l'une des revendications précédentes, caractérisé en ce que le cliquet (20) est couplé dans sa position de repos par un dispositif d'encliquetage (26f) de façon amovible avec le ressort de rappel (26) et est désaccouplé du ressort de rappel (26) en position déployée.
